# EUROPEAN PATENT APPLICATION

(11) **EP 2 031 688 A1**
(43) Date of publication of application: **04.03.2009**
(21) Application number: 08161465.3
(22) Date of filing: 30.07.2008
(51) Int. Cl.: H01M 8/02

(54) **Bipolar plate for polymer membrane (PEM) fuel cells.**

(30) Priority: 06.08.2007 IT VE20070056
(71) Applicant: SAE Impianti S.r.l., 30010 Campagna Lupia (IT)
(72) Inventor: Martignon, Michele, 30010, CAMPAGNA LUPIA (IT)
(74) Representative: Piovesana, Paolo

(57) **Abstract**

A bipolar plate for polymer membrane fuel cells, comprises an aluminium support (2) obtained by die-casting, complete with surface channels (4) (flow field), and covered with a first coating of nickel followed by a silver coating.

## Description

The present invention relates to a bipolar plate for polymer membrane (PEM) fuel cells.

Fuel cells are known consisting of two electrodes, i.e. anode and cathode, fed with H₂ and air respectively and separated by a solid electrolyte consisting of a thin polymer membrane interposed between two bipolar plates forming the electrodes.

In particular, the polymer membrane consists of a porous baffle permeable to hydrogen ions and sandwiched between two electroconductive gas-permeable supports in the form of fabric or paper.

The function of the polymer membrane is to enable the protons formed at the anode by the presence of a catalyst (platinum) to pass towards the cathode so that the electrons, which form at the anode, reach the cathode only via an external circuit, to generate an electric current.

The function of the fabric support or gas diffusion layer (GDL) is to distribute the reacting gases uniformly on the membrane surface and to convey the current extracted from the electrodes towards the bipolar plates.

The function of the bipolar plates is to guide the gases towards the GDL and to physically enclose the GDL and membrane, to sealedly separate them from the outer environment. In this manner the bipolar plates are similar to the cathode and anode of a traditional battery and become the electrical continuity elements between the different cells.

The bipolar plates currently known commercially are substantially of three different types:
- of non-porous graphite material,
- of suitably covered metal material,
- of composite plastic material with added additive.

The bipolar plates obtained by pressing non-porous graphite are those currently preferred for PEMs because of their high chemical and thermal stability. They are however poor conductors compared with metal materials (about 7 S/cm against 5x10⁵), they are heavier (higher specific gravity combined with greater thicknesses), and have lesser structural strength and a general fragility. They are also of high cost.

Those bipolar plates which use metal as base material are generally constructed of a metal having good corrosion resistance (e.g. stainless steel) covered with a coating protective material in the form of nobler metals, metal carbides and/or metal nitrides, which increase their corrosion resistance and decrease the electrical surface contact resistance (titanium, gold, NiCr, etc.).

These plates present excellent electrical conductivity, they can be economically pressed by plastic deformation and blanking to obtain small thicknesses, with reduced weight and dimensions, and have high structural strength. In contrast, the surface coating is chemically less stable and resistant than graphites, and at the same time thermal stresses and the chemically aggressive environment lead to problems in the adhesion of the coating to the metal substrate, with consequent performance loss (corrosion, polymer membrane contamination with metal ions).

Those plates made with composite materials with added additives aim at achieving the electrical conductivity of graphites (even though low), while improving mechanical strength, weight (use of lighter materials) and workability (injection moulding), and reducing production cost.

The object of the invention is to provide a bipolar plate which has chemical resistance properties similar to graphite, which maintains the excellent electrical-thermal properties of metals, and which can be easily and economically obtained in its final utilization form without additional mechanical machining.

This object is attained by a bipolar plate for polymer membrane fuel cells as described in claim 1.

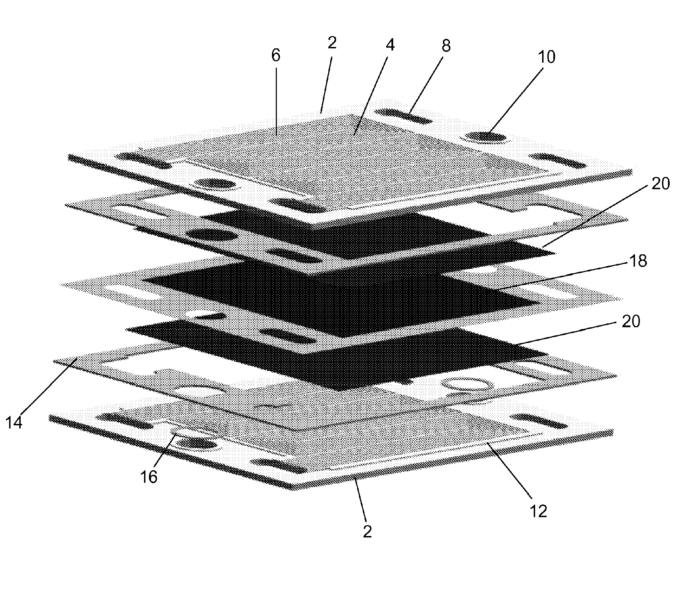

A preferred embodiment of the present invention is further clarified hereinafter with reference to the accompanying drawing which shows an exploded perspective view of a cell obtained with a bipolar plate of the invention.

As can be seen from the drawing, the bipolar plate of the invention is made of die-cast aluminium, and comprises on both surfaces a series of channels 4 for reactant gas distribution (flow field obtained directly during casting). Holes 8 for gas passage, holes 10 for the clamping ties, and a seat 12 for housing an expanded silicone gasket 14 are also obtained during die-casting.

The bipolar plate of the invention is obtained by an aluminium die-casting process able to achieve its complete final geometry.

The workpiece die-cast in this manner is subjected to finishing operations for its deburring and to eliminate any imperfection within the die closure region.

If necessary, surface grinding is carried out to achieve planarity tolerances.

The workpiece is then subjected to the next stage, i.e. electrolytic silver-plating, consisting specifically of:
- a cleaning and degreasing step,
- a step of electrolytically depositing a nickel; layer of about 2-3 µm,
- a step of electrolytically depositing a silver layer of 3-5 µm.

The workpiece treated in this manner is then joined to the gasket 14 to obtain a complete single piece.

The cell is assembled in the following manner. A sized spacer washer 16 is applied to the bipolar plate already joined to the silicone gasket 14, after which the lower GDL 20, the polymer membrane (MEA) 18 and the upper GDL 20 are inserted in their stacking sequence.

Finally a further plate also provided with a silicone gasket is positioned. The assembly formed in this manner is then fixed by bolts inserted through the passage holes 10.

From the aforegoing it is apparent that the bipolar plate of the invention presents numerous advantages, and in particular:
- it presents excellent thermal and electrical conductivity, a low specific gravity, and good material workability by virtue of its die-cast aluminium construction,
- it presents a substantial reduction in contact resistivity with GDL,
- it presents an increased plate corrosion resistance, and good surface hardness due to the surface electrolytic silver plating.

In addition the silicone gasket presents the following advantages:
- high compressibility to the benefit of a more simple and stable mechanical seal, even if strong tightening forces are present,
- good elastic return (easy dismantling and assembly),
- practically zero gas permeability (gasket),
- high thermal stress resistance,
- high resistance to chemical agents,
- workability by a die-cutting process, with competitive production costs which become highly attractive on a mass production basis.

Finally, the "sized dielectric spacers":
- allow correct compression of the GDL (acting as limit stop for controlled gasket and GDL compression),
- prevent undesired component flexure as they are positioned coaxially with the fixing bolts,
- complete the electrical isolation between the plates.

## Claims

1. A porous baffle for polymer membrane fuel cells, **characterised by** consisting of an aluminium support (2) obtained by die-casting, complete with surface channels (4) (flow field), and covered with a first substrate of nickel followed by a silver coating.

2. A plate as claimed in claim 1, **characterised in that** the nickel substrate is of 2-3 µm.

3. A plate as claimed in claim 1, **characterised in that** the silver coating is of 3-5 µm.

4. A plate as claimed in claim 1, **characterised by** comprising in its perimetral edge a seat (12) for housing a gasket (14).

5. A plate as claimed in claim 1, **characterised in that** the gasket is made of expanded silicone.

6. A plate as claimed in claim 1, **characterised by** comprising a sized spacer washer (16).
